(19) Europäisches Patentamt
European Patent Office
Office européen des brevets

(11) **EP 3 176 667 B1**

(12) **EUROPÄISCHE PATENTSCHRIFT**

(45) Veröffentlichungstag und Bekanntmachung des Hinweises auf die Patenterteilung:
**15.05.2019 Patentblatt 2019/20**

(51) Int Cl.:
***G05D 16/18*** *(2006.01)*     ***G05D 7/06*** *(2006.01)*
***G05B 15/02*** *(2006.01)*

(21) Anmeldenummer: **15198053.9**

(22) Anmeldetag: **04.12.2015**

(54) **VORSTEUEREINHEIT, VENTILANORDNUNG UND VERFAHREN ZUR GEREGELTEN BEREITSTELLUNG EINES FLUIDS**

PILOT VALVE UNIT, VALVE ASSEMBLY AND METHOD FOR THE CONTROLLED PROVISION OF A FLUID

UNITE DE PRECOMMANDE, AGENCEMENT DE SOUPAPE ET PROCEDE DE PREPARATION REGLEE D'UN FLUIDE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**07.06.2017 Patentblatt 2017/23**

(73) Patentinhaber: **Asco Numatics GmbH**
**75248 Ölbronn-Dürrn (DE)**

(72) Erfinder:
• **STEINLE, Harald**
**75443 Ötisheim (DE)**

• **PAULIG, Martin**
**75248 Ölbronn (DE)**
• **AMS, Felix**
**75236 Kämpfelbach (DE)**

(74) Vertreter: **Witte, Weller & Partner Patentanwälte mbB**
**Postfach 10 54 62**
**70047 Stuttgart (DE)**

(56) Entgegenhaltungen:
EP-A1- 2 921 924     DE-A1-102010 049 442
US-A1- 2012 102 980

**Beschreibung**

Die vorliegende Offenbarung betrifft eine Vorsteuereinheit zur Bereitstellung eines Vorsteuerdrucks für eine Ventileinheit zur geregelten Bereitstellung eines Fluids, wobei die Vorsteuereinheit zumindest ein Vorsteuerventil, insbesondere zumindest ein elektrisch gesteuertes Vorsteuerventil, und eine Regeleinheit aufweist, die mit der Vorsteuereinheit gekoppelt ist. Die Offenbarung betrifft ferner eine Ventilanordnung mit einer derartigen Vorsteuereinheit. Schließlich betrifft die Offenbarung ein Verfahren zur adaptiven, parameterbasierten Regelung eines Vorsteuerdrucks für eine Ventileinheit zur geregelten Bereitstellung eines Fluids sowie ein entsprechendes Maschinensteuerungsprogramm zur Ausführung des Verfahrens.

Aus der EP 2 921 924 A1 ist eine Vorrichtung zur Bereitstellung eines Fluids mit geregeltem Ausgangsdruck bekannt, die eine über einen Vorsteuerdruck gesteuerte Druckregeleinheit, an der ein Eingang für das Fluid, ein Ausgang für das Fluid sowie eine erste, zwischen dem Eingang und dem Ausgang wirkende Ventileinheit vorgesehen ist, und eine Vorsteuereinheit umfasst, die den Vorsteuerdruck bereitstellt, wobei die Druckregeleinheit eine erste Membran, auf die der Vorsteuerdruck einwirkt, und eine mechanisch mit der ersten Membran gekoppelte zweite Membran aufweist, auf die das den Ausgangsdruck aufweisende Fluid einwirkt, wobei zumindest die zweite Membran mechanisch auf die erste Ventileinheit einwirkt. Die Vorsteuereinheit weist zur Erzeugung des Vorsteuerdrucks beispielhaft zwei elektrisch gesteuerte Proportionalventile auf, wobei ein erstes Proportionalventil zur Erhöhung des Vorsteuerdrucks und ein zweites Proportionalventil zur Verringerung des Vorsteuerdrucks vorgesehen ist.

Die bekannte Vorrichtung erlaubt bereits eine hochgenaue Druckregulierung mit Genauigkeiten im Bereich von besser als 1 %, vorzugsweise besser als 0,5 %. Ein weiterer Vorteil der bekannten Vorrichtung ist die leistungsarme Druckregelung, da zum Betrieb der Vorsteuereinheit nur eine geringe elektrische Leistung erforderlich ist. Der Leistungsbedarf und die Regelgüte profitieren von der Vorsteuereinheit, die zur Ansteuerung des Hauptventils ausgebildet ist. Die Vorsteuereinheit kann auch als Piloteinheit bezeichnet werden. Ventile der Vorsteuereinheit können auch als Pilotventile bezeichnet werden.

Ein weiterer Vorteil der aus der EP 2 921 924 A1 bekannten Vorrichtung besteht in der reibungsarmen Lagerung beweglicher Teile des Hauptventils der Vorrichtung. Auch dies kann die Regelgüte weiter verbessern. Haftreibung, Stick-Slip-Effekte und dgl. können weitgehend vermieden werden. Es ist ferner von Vorteil, dass bereitgestellte Ausgangsdrücke Werte annehmen können, die nahezu ein Niveau der Eingangsdrücke erreichen. Auch dies geht darauf zurück, dass nur wenig Energie zur Druckregelung erforderlich ist.

Es hat sich jedoch gezeigt, dass ein weiterer Bedarf an einer Erhöhung der Genauigkeit besteht. Insbesondere besteht ein Bedarf an Ventilanordnungen, die ein hochstabiles Betriebsverhalten aufweisen, wobei die Genauigkeit möglichst nur in geringem oder gar vernachlässigbarem Maße durch Drift oder dergleichen beeinflussbar ist.

Vor diesem Hintergrund liegt der Erfindung die Aufgabe zugrunde, eine Vorsteuereinheit zur Bereitstellung eines Vorsteuerdrucks für eine Ventileinheit zur geregelten Bereitstellung eines Fluids anzugeben, wobei die Vorsteuereinheit eine hochgenaue Ansteuerung der Ventileinheit ermöglicht und möglichst zur Kompensation etwaiger exemplarbedingter oder betriebsbedingter Abweichungen ausgebildet ist. Vorzugsweise lässt sich mit der Vorsteuereinheit eine Ventileinheit stabil betreiben, ohne dass es im Betrieb zu spürbaren Änderungen des Regelverhaltens kommt, die sich auf den Druck und/oder den Durchsatz am Ausgang der Ventileinheit auswirken. Ferner ist die Vorsteuereinheit möglichst dazu ausgebildet, eine noch präzisere Druckregelung zu erlauben. Ferner sollen im Rahmen der vorliegenden Offenbarung eine mit einer solchen Vorsteuereinheit versehene oder koppelbare Ventilanordnung sowie ein korrespondierendes Verfahren zur Regelung eines Vorsteuerdrucks für eine Ventileinheit zur geregelten Bereitstellung eines Fluids angegeben werden. Daneben soll ein Maschinensteuerungsprogramm angegeben werden, das dazu ausgebildet ist, das Verfahren bei einer Vorsteuereinheit auszuführen.

Die Vorsteuereinheit betreffend wird die Aufgabe der Erfindung durch eine Vorsteuereinheit zur Bereitstellung eines Vorsteuerdrucks für eine Ventileinheit zur geregelten Bereitstellung eines Fluids gelöst, wobei die Vorsteuereinheit zumindest ein Vorsteuerventil, insbesondere zumindest ein elektrisch gesteuertes Vorsteuerventil, und eine Regeleinheit aufweist, die mit der Vorsteuereinheit gekoppelt ist, wobei die Regeleinheit zur adaptiven, parameterbasierten Regelung des zumindest einen Vorsteuerventils ausgebildet ist, wobei der Regelung ein einen Öffnungspunkt des Vorsteuerventils beschreibender kombinierter Parameter zugrunde gelegt wird, dessen Bestimmung auf Basis eines statischen Anteils und eines dynamischen Anteils erfolgt, wobei die Regelung des zumindest einen Vorsteuerventils auf Basis adaptiver Parameter erfolgt, die eine Kennlinie beschreiben, die einen Zusammenhang zwischen Öffnungsgrad des Vorsteuerventils und Steuergröße beschreibt, und die durch den Öffnungspunkt und eine Steilheit charakterisiert ist, wobei der statische Anteil eine, vorzugsweise messtechnisch ermittelte, individuelle Exemplarstreuung beschreibt, und wobei der dynamische Anteil im Zeitablauf veränderlich ist, wobei eine Regelung des dynamischen Anteils auf Basis eines Sollwert-Istwert Vergleichs, den Vorsteuerdruck betreffend, erfolgt.

Die der Erfindung zugrundeliegende Aufgabe wird auf diese Weise vollkommen gelöst.

Erfindungsgemäß wird nämlich bei der Ansteuerung des zumindest einen Vorsteuerventils nicht von einer fixen, unveränderlichen Kennlinie ausgegangen. Vielmehr erfolgt eine exemplarspezifische bzw. einsatzspezifische oder anwendungsspezifische Anpassung dieser Kennlinie. Beispielhaft kann eine solche Kennlinie des zumindest einen Vorsteuerventils durch einen Öffnungspunkt (auch bezeichnet als Offset) sowie einen Verstärkungsfaktor (auch bezeichnet als Gain oder Steilheit) beschrieben werden. Der Öffnungspunkt bezeichnet hierbei den Punkt, bei dem das Vorsteuerventil soweit angesteuert (etwa bestromt) wird, dass bewegliche Teile des Ventils gerade so aus einem Stillstand in eine Bewegung übergehen. Es versteht, dass ein solcher "Offset" nicht nur beim eigentlichen Öffnen des Ventils sondern auch beim Schließen des Ventils vorgesehen sein kann. Insofern ist es hierbei zunächst einmal unerheblich, ob Ventile vorgesehen sind, die im stromlosen Zustand offen oder geschlossen sind. Der Begriff "Öffnungspunkt" ist daher nicht einschränkend zu verstehen.

Bei dem zumindest einen Vorsteuerventil kann es sich beispielhaft um ein elektromagnetisches Proportionalventil handeln. Das oder die Vorsteuerventile können auch als Pilotventile bezeichnet werden. Bei dem zu regelnden Fluid handelt es sich insbesondere um ein gasförmiges Fluid, etwa um Luft oder um andere Gase, die im industriellen Umfeld, im Laborumfeld oder im medizinischen Umfeld verwendet werden.

Beispielhaft kann die Ventilanordnung insgesamt als 3-Wege-Proportionalventil mit elektronischer Steuerung ausgeführt sein. Die Ventilanordnung eignet sich für anspruchsvolle Anwendungen, insbesondere auf dem Gebiet der pneumatischen Regelungstechnik. Vorzugsweise kann die Ventilanordnung mit einer Regelabweichung von weniger als 0,5 %, vorzugsweise von weniger als 0,25 % betrieben werden. Die Verwendung zweier Proportionalventile zur Vorsteuerung des Hauptventils erlaubt eine hochgenaue Regelung des Drucks bzw. des Volumenstroms. Das Fluid selbst, das die Ventilanordnung durchströmt, wird allenfalls nur unwesentlich erwärmt.

Es wird also vorgeschlagen, anstatt eines festen Offsets für die Vorsteuerventile einen adaptiven Offset zu verwenden, der zwei Komponenten aufweist, nämlich einen statischen Anteil und einen dynamischen Anteil. Vorzugsweise erfolgt die Ermittlung des statischen Anteils und des dynamischen Anteils auf unterschiedlichen Wegen, um unterschiedliche Einflussfaktoren bzw. Fehlerquellen/Toleranzverursacher berücksichtigen zu können.

Die Regelung des zumindest einen Vorsteuerventils erfolgt auf Basis adaptiver Parameter, die eine Kennlinie beschreiben, die einen Zusammenhang zwischen Öffnungsgrad des Vorsteuerventils und Steuergröße beschreibt, und die durch den Öffnungspunkt und eine Steilheit charakterisiert ist. Eine Ventilkennlinie weist beispielhaft einen typischen Hystereseverlauf auf, wobei Flanken für das Öffnen und das Schließen des Ventils nicht deckungsgleich sind. Eine Hysterese in der Vorsteuerung kann bspw. dadurch vermieden werden, dass zwei Vorsteuerventile verwendet werden, von denen eines zur Erhöhung des Vorsteuerdrucks und ein anderes zur Reduzierung des Vorsteuerdrucks verwendet wird. Somit wird jeweils nur eine Flanke genutzt.

Im Rahmen der vorliegenden Offenbarung wird vorgeschlagen, diese Kennlinie fallweise adaptiv zu verschieben bzw. zu verändern, um Toleranzen, Streuungen, Temperatureffekte und dergleichen kompensieren zu können.

Die Anpassung der entsprechenden Parameter hat den Vorteil, dass stets bekannt ist, bei welchem Niveau des Eingangssignals sich der Betriebszustand des Ventils (etwa offen oder geschlossen) spürbar ändert. Somit wird es möglich, kleinere Änderungen beim Vorsteuerdruck hervorzurufen, wodurch wiederum genauere Regelung des Ausgangsdrucks ermöglicht wird.

Der statische Anteil beschreibt eine individuelle Exemplarstreuung. Die Exemplarstreuung kann beispielhaft messtechnisch ermittelt werden, etwa im Rahmen der Fertigung oder bei der erstmaligen Inbetriebnahme des entsprechenden Vorsteuerventils. Eine Exemplarstreuung eines Ventils kann bspw. durch Toleranzen der Magnetkraft, der Rückstellkraft sowie der wirksamen Differenzflächen begründet sein. Es versteht sich, dass die individuelle Exemplarstreuung nicht in jedem Falle messtechnisch ermittelt werden muss. Es sind auch Ausgestaltungen vorstellbar, bei denen etwa chargenweise eine Messung vorgenommen wird. Alternativ oder zusätzlich ist eine empirische Ermittlung und Herleitung von Exemplarstreuungen vorstellbar.

Der dynamische Anteil ist im Zeitablauf veränderlich, wobei eine Regelung des dynamischen Anteils auf Basis eines Sollwert-Istwert Vergleichs erfolgt, der sich insbesondere auf den Vorsteuerdruck bezieht. Auf diese Weise können etwa betriebsbedingte Einflussfaktoren und Abweichungen erfasst und kompensiert werden. Die Regelgüte während des Betriebs sowie die Unempfindlichkeit gegenüber Drift und dergleichen kann sich weiter erhöhen.

Gemäß einer Weiterbildung dieser Ausgestaltung erfolgt eine Aktualisierung (Anpassung) des dynamischen Anteils, wenn das Vorsteuerventil nahe des Öffnungspunktes betrieben wird, wobei im Falle eines neuen Wertes des dynamischen Anteils des Öffnungspunktes ein historischer (vorheriger) Wert ersetzt wird. Nahe des Öffnungspunktes des Vorsteuerventils hat etwa die Flankensteilheit keine große Auswirkung auf das aktuelle Betriebsverhalten bzw. auf einen aktuellen Betriebspunkt. Beispielhaft kann die Regeleinheit einen schnellen Regler zur Regelung des dynamischen Anteils aufweisen. Der schnelle Regler kann etwa als PD-Regler gestaltet sein. Andere Ausgestaltungen sind denkbar.

Die Anpassung des dynamischen Anteils kann bspw. eine Ermittlung des Differenzdrucks über dem Ventil (vgl. Eingangsdruck und Ausgangsdruck) beinhalten. Sollten sich hier nahe des Öffnungspunktes signifikante Abweichungen ergeben, so kann eine Anpassung des dynamischen Anteils erfolgen.

Gemäß einer weiteren Ausgestaltung der Vorsteuereinheit wird der Regelung des zumindest einen Vorsteuerventils ferner ein einen Verstärkungsfaktor beschreibender Parameter zugrunde gelegt, dessen Bestimmung auf Basis eines PWM-Ausgangssignals zur Steuerung des zumindest einen Vorsteuerventils und eines erfassten Spulenstromes des Vorsteuerventils erfolgt.

Vorzugsweise wird das zumindest eine Vorsteuerventil mit einem pulsweitenmodulierten Signal (PWM-Signal) angesteuert. Der Verstärkungsfaktor beschreibt eine Steigung (Steilheit) der Kennlinie. Der Verstärkungsfaktor wird allgemein auch als Gain beschrieben. Der Verstärkungsfaktor ist üblicherweise abhängig von aktuellen Einsatzbedingungen, etwa vom Niveau der Versorgungsspannung, von der Temperatur sowie vom aktuellen Widerstand der Ventilspulen. Diese Werte können sich während des Betriebs, jedoch auch zwischen zwei Einsätzen, ändern.

Beispielhaft wird das zumindest eine Vorsteuerventil mit einem Spannungssignal angesteuert, das als pulsweitenmoduliertes Rechteck-Spannungssignal ausgestaltet ist. Dieses Signal kann zunächst dem PWM-Ausgangssignal entsprechen bzw. darauf basieren. Der erfasste Spulenstrom ist einerseits vom aktuellen PWM-Ausgangssignal und andererseits vom Vorsteuerventil selbst (etwa vom Widerstand der Ventilspulen) abhängig. Beispielsweise können sich Ventilspulen während des Betriebs erwärmen. Dies hat Auswirkungen auf den aktuell anliegenden elektrischen Widerstand. Auch Schwankungen der Versorgungsspannung können sich mittelbar über das PWM-Ausgangssignal auf den erfassten Spulenstrom des Vorsteuerventils auswirken.

Die Regelung des Verstärkungsfaktors bzw. des Parameters, der den Verstärkungsfaktor in der Kennlinie zur Regelung des Vorsteuerventils beschreibt, erlaubt eine Anpassung der Steigung bzw. Neigung der der aktuellen Regelung zugrundeliegenden Kennlinie. Auf diese Weise kann die Kennlinie (beschrieben durch die wesentlichen Parameter Öffnungspunkt und Verstärkungsfaktor) noch besser an Exemplarstreuungen und sich verändernde Betriebszustände angepasst werden.

Gemäß einer weiteren beispielhaften Ausgestaltung weist die Regeleinheit (16) einen langsamen Regler zur Nachregelung des Verstärkungsfaktors auf. Auf diese Weise kann etwa dem Umstand Rechnung getragen werden, dass die Messung des Spulenstroms selbst nicht hochdynamisch erfolgt. Eine langsame Regelung oder Nachregelung beinhaltet beispielhaft Mittelwerte beteiligter Größen, die über Zeiträume von 1 s (Sekunde) bis hin zu 10 s oder gar mehr bestimmt werden. Eine solche langsame Nachregelung ist nicht nachteilig, da etwa temperaturbedingte Abweichungen sich auch nicht sprunghaft bzw. abrupt, sondern erst über einen längeren Zeitraum im erfassten Spulenstrom niederschlagen. Somit kann ein Korrekturfaktor für den Verstärkungsfaktor auf Basis gemittelter Größen hergeleitet werden. Der Korrekturfaktor selbst kann wiederum gemittelt werden (etwa gleitende Mittelwertbildung).

Somit kann der Korrekturfaktor auf einen Eingangswert für die Pulsweitenmodulation angewandt werden, so dass schlussendlich eine Korrektur des PWM-Tastverhältnisses erfolgt, die den sich ergebenden Spulenstrom in Richtung des gewünschten Sollstromes anpasst. Die langsame Regelung erlaubt somit eine korrigierte, adaptierte Umsetzung eines Sollstrom-Signals in der PWM-Stufe.

Gemäß einer weiteren Ausgestaltung der Vorsteuereinheit sind zwei elektrisch gesteuerte Vorsteuerventile vorgesehen, die als Proportionalventile gestaltet sind, wobei ein erstes Vorsteuerventil zur Erhöhung des Vorsteuerdrucks und ein zweites Vorsteuerventil zur Verringerung des Vorsteuerdrucks vorgesehen ist, und wobei die Vorsteuerventile vorzugsweise individuell geregelt werden. Es versteht sich, dass jedes der beiden Vorsteuerventile im Hinblick auf den Öffnungspunkt sowie den Verstärkungsfaktor der Kennlinie individuelle Streuungen bzw. Abweichungen aufweisen kann. Beispielhaft ist das erste Vorsteuerventil eingangsseitig fluidisch mit einem Eingang der Ventileinheit verbunden. Der Ausgang des ersten Vorsteuerventils kann demgemäß fluidisch mit dem Eingang des zweiten Vorsteuerventils verbunden sein. Der Ausgang des zweiten Vorsteuerventils kann etwa als Entlüftung gestaltet sein.

Gemäß einer weiteren Ausgestaltung der Vorsteuereinheit weist diese ferner zumindest einen Temperatursensor zur Erfassung einer Spulentemperatur des zumindest einen Vorsteuerventils auf. Vorzugsweise ist die Regeleinheit zur Temperaturkompensation ausgebildet. Eine Temperatur der Spulen selbst, aber auch eine Umgebungstemperatur, kann einen Einfluss auf das Regelverhalten haben. Ein Temperatursensor, der in geeigneter Weise bei der Vorsteuereinheit ausgebildet ist, erlaubt gewissermaßen die Erfassung der Einflüsse externer Temperaturänderungen und interner Temperaturänderungen. Auch ein durch den Temperatursensor bereitgestelltes Signal kann zur Anpassung der der Regelung der Vorsteuerventile zugrundeliegenden Kennlinie genutzt werden.

Die Ventilanordnung betreffend wird die Aufgabe der Erfindung durch eine Ventilanordnung zur geregelten Bereitstellung eines Fluids gelöst, wobei die Ventilanordnung eine über einen Vorsteuerdruck regelbare Ventileinheit zur Bereitstellung eines Fluids mit geregeltem Ausgangsdruck oder geregeltem Volumenstrom aufweist, und wobei die Ventilanordnung mit einer Vorsteuereinheit gemäß zumindest einem der hier beschriebenen Aspekte versehen ist.

Auch auf diese Weise wird die Aufgabe der Erfindung vollkommen gelöst.

Zur strukturellen Ausgestaltung der Ventilanordnung wird beispielhaft auf die EP 2 921 924 A1 verwiesen. In einer beispielhaften Ausführungsform ist die Ventilanordnung dazu ausgestaltet, gasförmige Fluide hochgenau mit gutem Ansprechverhalten und ausgeprägter Wiederholgenauigkeit bei sehr geringer Hysterese zu regeln, wobei eine Vorsteuereinheit mit einem Leistungsbedarf von kleiner 5 W vorgesehen ist. Gemäß dieser Gestaltung kann etwa ein Durchfluss (Volumenstrom) von 1200 l/min (Liter pro Minute) erzielt werden. Hierbei können Eingangsdrücke von etwa 0 bar bis 12 bar verarbeitet werden und, je nach Eingangsdruck, Ausgangsdrücke von etwa 0 bar bis 10 bar bereitgestellt werden. Es versteht sich, dass diese Kennwerte lediglich ein exemplarischen Beispiel veranschaulichen und nicht einschränkend zu verstehen sind.

Gemäß einer Ausgestaltung der Ventilanordnung ist ein erster Drucksensor zur Erfassung eines Eingangsdrucks der Ventileinheit, ein zweiter Drucksensor zur Erfassung eines Ausgangsdrucks der Ventileinheit und ein dritter Drucksensor zur Erfassung eines Vorsteuerdrucks der Vorsteuereinheit vorgesehen. Auf diese Weise kann mit nur drei Drucksensoren eine hochgenaue Regelung und Überwachung des Regelungsprozesses erfolgen. Vorzugsweise ist die Vorsteuereinheit, insbesondere am Eingang eines zur Erhöhung des Vorsteuerdrucks genutzten Vorsteuerventils, fluidisch mit einem Eingang der Ventileinheit verbunden. Auf diese Weise ist der durch den ersten Drucksensor erfasste Eingangsdruck auch der Eingangsdruck des Vorsteuerventils.

Das Verfahren betreffend wird die Aufgabe der Erfindung durch ein Verfahren zur adaptiven, parameterbasierten Regelung eines Vorsteuerdrucks für eine Ventileinheit zur geregelten Bereitstellung eines Fluids gelöst, wobei das Verfahren die folgenden Schritte umfasst:

- Ermittlung eines kombinierten Parameters, der einen Öffnungspunkt des zumindest eines Vorsteuerventils beschreibt, umfassend Ermittlung eines statischen Anteils und eines dynamischen Anteils des Parameters, und

- elektrische Ansteuerung zumindest eines Vorsteuerventils, vorzugsweise eines ersten Vorsteuerventils und eines zweiten Vorsteuerventils, auf Basis des Parameters

- Regelung des zumindest einen Vorsteuerventils auf Basis adaptiver Parameter, die eine Kennlinie beschreiben, die einen Zusammenhang zwischen Öffnungsgrad des Vorsteuerventils und Steuergröße beschreibt, und die durch den Öffnungspunkt und eine Steilheit charakterisiert ist,
  wobei der statische Anteil eine, vorzugsweise messtechnisch ermittelte, individuelle Exemplarstreuung beschreibt, und
  wobei der dynamische Anteil im Zeitablauf veränderlich ist, wobei eine Regelung des dynamischen Anteils auf Basis eines Sollwert-Istwert Vergleichs, den Vorsteuerdruck betreffend, erfolgt.

Auch auf diese Weise wird die Aufgabe der Erfindung vollkommen gelöst.

Auf diese Weise kann nämlich etwa ein Offset einer zur Ansteuerung des zumindest einen Vorsteuerventils genutzten Kennlinie verschoben werden, um Exemplarstreuungen und/oder sich verändernde Betriebszustände berücksichtigen zu können. Vorzugsweise erfolgt die Ermittlung des kombinierten Parameters jeweils separat für das erste Vorsteuerventil und das zweite Vorsteuerventil, sofern vorhanden.

Gemäß einer Weiterbildung umfasst das Verfahren ferner den folgend Schritt:

- adaptive Anpassung der Parameter für Öffnungsgrad und Steuergröße, in Abhängigkeit von einem Betriebszustand der Ventileinheit.

Gemäß einer weiteren Ausgestaltung des Verfahrens umfasst dieses ferner die folgenden Schritte:

- Ansteuerung eines ersten Vorsteuerventils zur Erhöhung des Vorsteuerdrucks, und

- Ansteuerung eines zweiten Vorsteuerventils zur Verringerung des Vorsteuerdrucks.

Ein weiterer Aspekt der vorliegenden Offenbarung betrifft ein Maschinensteuerungsprogramm, das Programmcode aufweist, der dazu ausgebildet ist, eine Regeleinheit einer Vorsteuereinheit für eine Ventileinheit zu veranlassen, die Schritte zumindest einer hierin beschriebenen Ausgestaltung eines Verfahrens zur Regelung eines Vorsteuerdrucks auszuführen, wenn das Maschinensteuerungsprogramm auf einer Datenverarbeitungsanlage ausgeführt wird, die mit der Regeleinheit gekoppelt ist.

Auf diese Weise kann in einfacher Weise auf die Steuerung Einfluss genommen werden. Auch eine Überwachung und Dokumentation der Funktion der Ventilanordnung bzw. der Vorsteuereinheit zur Regelung der Ventilanordnung vereinfacht sich. Es sind Ausgestaltungen denkbar, bei denen das Maschinensteuerungsprogramm auf einem stationären, ggfs. in die Regeleinheit integrierten oder mit dieser fest gekoppelten, Gerät oder Computer abläuft.

Es sind jedoch auch Gestaltungen denkbar, bei denen das Maschinensteuerungsprogramm auf einem mobilen Endgerät abläuft, etwa auf einem tragbaren Computer, einem Terminal, einem Tablet, einem Mobiltelefon oder dergleichen.

Weitere Vorteile und Ausgestaltungen ergeben sich aus der folgenden Beschreibung und den beigefügten Zeichnungen.

Ausführungsbeispiele der Erfindung sind in den beigefügten Zeichnungen dargestellt und werden in der nachfolgenden Beschreibung näher erläutert. Es zeigen:

Fig. 1    einen schematischen Längsschnitt durch eine beispielhafte Ausgestaltung einer Ventilanordnung;

Fig. 2    eine schematische, stark vereinfachte Darstellung einer Kennlinie eines Ventils;

Fig. 3    eine schematische, stark vereinfachte Blockdarstellung einer Ausgestaltung einer Ventilanordnung; und

Fig. 4    eine weitere schematische, stark vereinfachte Blockdarstellung einer Ventilanordnung zur Veranschaulichung einer Ansteuerung.

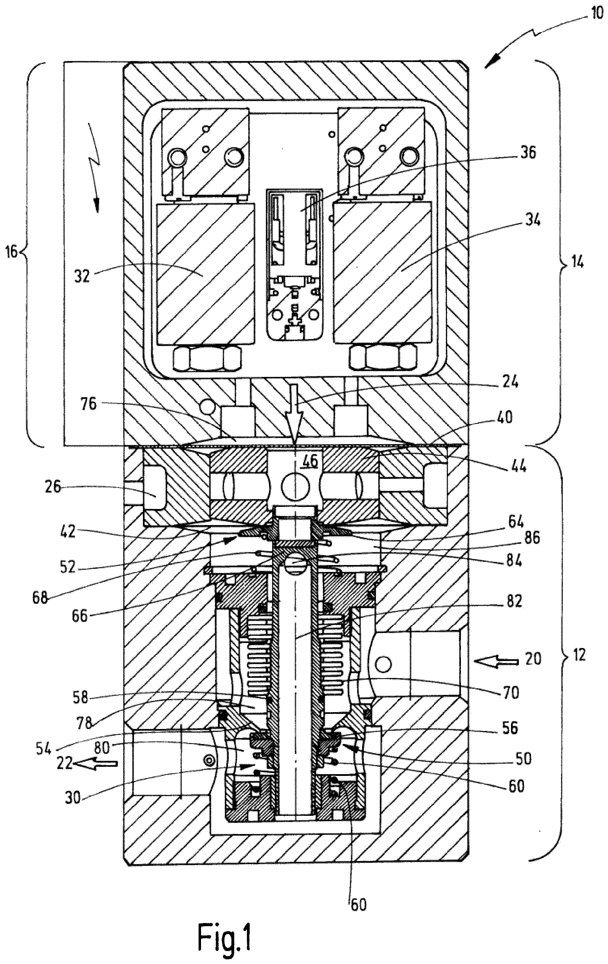

Fig. 1 veranschaulicht anhand eines Längsschnitts eine Ausgestaltung einer Ventilanordnung 10, die zur hochgenauen Regelung eines Ausgangsdrucks bzw. eines Volumenstroms ausgebildet ist. In diesem Zusammenhang wird erneut auf die EP 2 921 924 A1 verwiesen, die eine Ventilanordnung beschreibt, die in struktureller Hinsicht der Ventilanordnung 10 gemäß Fig. 1 zumindest ähnlich gestaltet ist.

Die Ventilanordnung 10 ist modulartig gestaltet und weist eine Ventileinheit 12 sowie eine Vorsteuereinheit 14 auf. Der Vorsteuereinheit 14 ist ferner eine Regeleinheit 16 zugeordnet (in Fig. 1 lediglich schematisch angedeutet). Die Ventileinheit 12 kann auch als Hauptventileinheit bezeichnet werden. Die Vorsteuereinheit 14 kann auch als Piloteinheit bezeichnet werden.

Die Ventileinheit 12 umfasst verschiedene Anschlüsse für ein zu regelndes Fluid. Bei dem Fluid kann es sich insbesondere um ein gasförmiges Fluid, etwa um Luft oder dergleichen handeln. Die Ventileinheit 12 ist mit einem Eingang 20 und einem Ausgang 22 versehen. Am Eingang 20 liegt üblicherweise ein unter Druck stehendes Fluid an. Am Ausgang 22 kann das Fluid mit einem geregelten Druck bzw. mit einem geregelten Volumenstrom bereitgestellt werden. Ferner ist ein Anschluss 24 zur Vorsteuerung vorgesehen, an dem ein Pilotdruck bzw. ein Vorsteuerdruck anliegen kann. Üblicherweise erfolgt beim Anschluss 24 kein Medientransfer. Schließlich weist die Ventileinheit 12 einen Entlüftungsanschluss 26 auf, über den eine Entlüftung erfolgen kann.

Die Ventileinheit 12 beherbergt ein Ventil 30, das auch als Hauptventil bezeichnet werden kann. Das Ventil 30 ist als mechanisches Ventil ausgestaltet und kann fluidisch über einen Pilotdruck oder Vorsteuerdruck gesteuert werden. Die Vorsteuereinheit 14 umfasst zumindest ein Vorsteuerventil 32, 34. Beispielhaft ist ein erstes Vorsteuerventil 32 und ein zweites Vorsteuerventil 34 vorgesehen. Das Vorsteuerventil 32 ist beispielhaft zur Druckerhöhung vorgesehen. Das Vorsteuerventil 34 ist beispielhaft zur Drucksenkung vorgesehen. Über die Vorsteuerventile 32, 34 kann der Vorsteuerdruck in geeigneter Weise reguliert werden, um über den Anschluss 24 auf das Ventil 30 einzuwirken. Ferner ist die Vorsteuereinheit 14 beispielhaft mit einem Sicherheitsventil 36 versehen, das etwa im Falle eines Defekts oder des Ausfalls einer Versorgungsspannung einen definierten Betriebszustand herbeiführt. Beispielhaft sind die Vorsteuerventile 32, 34 als sog. 2/2 NC Ventile ausgestaltet. Die Vorsteuerventile 32, 34 können auch als Proportionalventile ausgestaltet sein.

Die Vorsteuerventile 32, 34 sind ferner beispielhaft als sog. NC Ventile gestaltet, also als Ventile, die im stromlosen Zustand geschlossen sind (NC = normally closed). Das Sicherheitsventil kann hingegen als sog. NO Ventil gestaltet sein (NO = normally open), also als im stromlosen Zustand geöffnetes Ventil. Auf diese Weise wird sichergestellt, dass im Falle eines Defekts oder eines Ausfalls der Versorgungsspannung eine Entlüftung der Vorsteuereinheit 14 erfolgt, so dass das Ventil 30 deaktivierbar ist.

Durch die Vorsteuereinheit 14 kann die Ventileinheit 12 derart betrieben werden, dass die Ventilanordnung 10 insgesamt wie ein 3/3 NC Regelventil (drei Anschlüsse, drei Schaltstellungen) wirkt, wobei das Ventil 30 insgesamt als Proportionalventil betreibbar ist. Die Vorsteuereinheit 14 wirkt über den Anschluss 24 auf eine Membran 40 ein. Über die Membran 40 wird ein Verbindungstück 44 beaufschlagt, das zwischen der Membran 40 und einer weiteren Membran 42 angeordnet ist. Die Membranen 40, 42 sind beispielhaft gehäusefest an der Ventilanordnung 10 aufgenommen und über das Verbindungstück 44 fest miteinander verbunden und gemeinsam miteinander bewegbar. Ein Vorsteuerdruck, der in der Membran 40 anliegt, und eine Bewegung der Membran 40 auslöst, wird über das Verbindungstück 44 in eine Bewegung der (inneren) Membran 42 übertragen. Das Verbindungstück 44 weist einen Hohlraum oder Zwischenraum 46 auf, der mit dem Entlüftungsanschluss 26 verbunden ist.

Das Ventil 30 der Ventileinheit 12 weist einen ersten Ventilabschnitt 50 und einen zweiten Ventilabschnitt 52 auf. Der erste Ventilabschnitt 50 umfasst einen Sitz 54, der mit einem Teller 56 zusammenwirkt. Das Ventil 30 umfasst ferner einen beweglichen Stößel 58, an dem beispielhaft der Teller 56 aufgenommen ist. Durch eine Bewegung des Stößels 58 kann der Teller 56 dichtend am Sitz 54 zur Anlage gelangen bzw. vom Sitz 54 wegbewegt werden. Je nachdem, ob der Teller 56 dichtend am Sitz 54 anliegt oder nicht, wird eine fluidische Verbindung zwischen dem Eingang 20 und dem Ausgang 22 hergestellt. Ferner ist dem ersten Ventilabschnitt 50 eine Feder 60 zugeordnet, die den Teller 56 in Richtung auf den Sitz 54 beaufschlagt.

Der zweite Ventilabschnitt 52 des Ventils 30 umfasst einen Sitz 64 sowie einen Teller 66. Beispielhaft ist der Teller 66 an einem axialen frontalen Ende des Stößels 58 ausgebildet. Der Sitz 64 ist am Verbindungstück 44 aufgenommen, wobei die Membran 42 zwischen dem Sitz 64 und dem Verbindungstück 44 angeordnet ist. Der Sitz 64 durchragt die Membran 42 und ist mit einer zentralen Durchgangsöffnung versehen. Dem zweiten Ventilabschnitt 52 ist ferner eine Feder 68 zugeordnet, die sich gehäuseseitig abstützt und den (auslenkbaren) Sitz 64 in Richtung auf die Membran 40 beaufschlagt. Der Sitz 54 ist gestellfest aufgenommen. Der Sitz 64 ist gemeinsam mit dem Verbindungstück 44 bewegbar, wenn die Membranen 40, 42 ausgelenkt werden.

Am Stößel 58 ist ferner ein Ausgleichselement 70 aufgenommen, das beispielhaft als Metallbalg gestaltet ist. Das Ausgleichselement 70 ist dazu ausgebildet, Druckschwankungen in der Ventileinheit 12 zu kompensieren. Insbesondere glättet das Ausgleichselement 70 unerwünschte eingangsseitige Druckschwankungen.

Zur Druckerhöhung am Ausgang 22 der Ventileinheit 12 wird das druckerhöhende Vorsteuerventil 32 angesteuert, um den Druck in einer Vorsteuerkammer 76, die an die Membran 40 angrenzt, zu erhöhen. Somit kann über die Vorsteuerung 24 mit einem erhöhten Druck auf die Membran 40 eingewirkt werden, so dass sich diese auslenkt. Die Auslenkung bzw. Bewegung der Membran 40 überträgt sich über das Verbindungstück 44 auf die Membran 42 sowie auf den Sitz 64. Die Auslenkung des Sitzes 64 überträgt sich über den Teller 66 auf den Stößel 58, so dass schlussendlich der Teller 56 vom Sitz 54 des ersten Ventilabschnitts 50 gelöst wird. Auf diese Weise kann eine fluidische Verbindung zwischen einem Eintrittsraum 78 und einem Austrittsraum 80 der Ventileinheit 12 hergestellt werden, so dass am Eingang 20 anliegendes Fluid in Richtung auf den Ausgang 22 nachströmen kann.

Folglich kommt es zu einer Druckerhöhung im Austrittsraum 80. Der Austrittsraum 80 ist fluidisch mit einem Sackloch 82 im Stößel 58 verbunden. Das Sackloch 82 mündet in zumindest eine Öffnung 84, die eine Verbindung zu einem Koppelraum 86 aufweist. Somit erfolgt auch im Koppelraum 86 eine Druckerhöhung. Auf diese Weise kann das unter Druck stehende Fluid auf die Membran 42 in Richtung auf die Membran 40 entgegen dem Vorsteuerdruck (Pfeil 24) einwirken. Auf diese Weise kann ein Gleichgewichtszustand erzielt werden.

Zur Druckabsenkung kann das zweite Vorsteuerventil 34 aktiviert werden, um einen Druck in der Vorsteuerkammer 76 zu reduzieren. Sofern im Koppelraum 86 ein hinreichend hoher Druck anliegt, können der Sitz 64 und die Membran 42 in Richtung auf die Membran 40 ausgelenkt werden. Hierzu kann auch die Feder 68 beitragen. In Richtung dieser Bewegung steht dem Stößel 58 nur ein begrenzter Hub zur Verfügung. Sofern die Bewegung des Sitzes 64 und der Membran 42 einen maximalen Hub des Stößels 58 übersteigt, hebt sich der Sitz 64 vom Teller 66 ab. Es wird eine fluidische Verbindung zwischen dem Koppelraum 86 und dem Zwischenraum 46 hergestellt, wodurch eine Entlüftung des Koppelraumes 86 über die Entlüftung 26 erfolgt. Auf diese Weise wird überschüssiger Druck abgebaut, so dass die Ventileinheit 12 auf einen (niedrigeren) Zieldruck eingeregelt werden kann.

Vorteilhafte Betriebsarten der Vorsteuereinheit 14 bzw. der Regeleinheit 16, die insbesondere die Ansteuerung der Vorsteuerventile 32, 34 betreffen, werden nachfolgend näher erläutert.

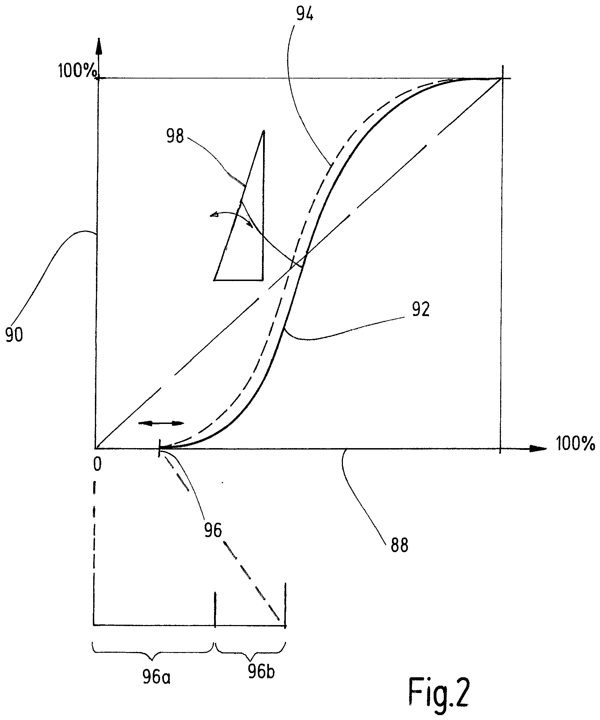

Fig. 2 zeigt anhand einer beispielhaften, stark vereinfachten Darstellung einen exemplarischen Verlauf einer Kennlinie zur Ansteuerung eines Pilotventils. In Fig. 2 veranschaulicht eine mit 88 bezeichnete Abszissenachse ein Ansteuerungssignal (etwa Steuerspannung bzw. sich ergebender Strom). Eine mit 90 bezeichnete zugeordnete Ordinatenachse beschreibt einen zugehörigen Öffnungsgrad (etwa Durchfluss) des Ventils. Die Achsen 88, 90 veranschaulichen lediglich qualitative Werte. Eine sich ergebende Kennlinie eines Ventils wird durch Flanken oder Pfade 92, 94 beschrieben. Beispielhaft beschreibt die Flanke 92 ein Öffnen des Ventils. Demgemäß beschreibt die Flanke 94 ein Schließen des Ventils. Insbesondere durch Elektromagneten angetriebene Ventile weisen üblicherweise eine Hysterese auf, daher sind die Flanken 92, 94 in der Praxis nicht deckungsgleich.

Eine gedachte ideale Kennlinie eines Ventils 30 ist in Fig. 2 durch eine gestrichelte Linie veranschaulicht, die als Diagonale Nullpunkte und Maximalwerte der Achsen 88, 90 verbindet.

Die Kennlinie des Ventils weist verschiedene charakteristische Parameter auf. Ein erster Parameter ist der Öffnungspunkt oder Offset 96. Ein Bereich zwischen einem Nullpunkt und dem Öffnungspunkt 96 kann auch als Totband bezeichnet werden. Ferner ist in Fig. 2 mit 98 eine Flankensteilheit angedeutet, die auch als Verstärkungsfaktor oder Gain bezeichnet werden kann. Auch wenn Kennlinien von Ventilen einer Serie üblicherweise einen sehr ähnlichen Verlauf aufweisen, so gibt es Abweichungen, die durch Exemplarstreuungen bedingt sind. Die Abweichungen können insbesondere den Öffnungspunkt 96 sowie die Steilheit 98 betreffen. Mit anderen Worten kann die Kennlinie zum einen verschoben (entlang der Achse 88) zum anderen aber auch zumindest abschnittsweise verkippt sein.

Gemäß der vorliegenden Offenbarung werden Ansätze aufgezeigt, wie die Vorsteuerventile 32, 34 angesteuert werden können, wobei der Regelung eine "adaptive" Kennlinie zugrunde gelegt wird.

Fig. 2 veranschaulicht ferner anhand einer vergrößerten Darstellung des Totbandes (Bereich zwischen dem Nullpunkt und dem Öffnungspunkt 96) einen statischen Anteil 96a und einen dynamischen Anteil 96b des Öffnungspunktes oder Offsets 96. Der statische Anteil 96a kann bspw. Exemplarstreuungen oder dergleichen berücksichtigen. Der dynamische Anteil 96b kann bspw. sich verändernde Betriebsbedingungen oder dergleichen berücksichtigen.

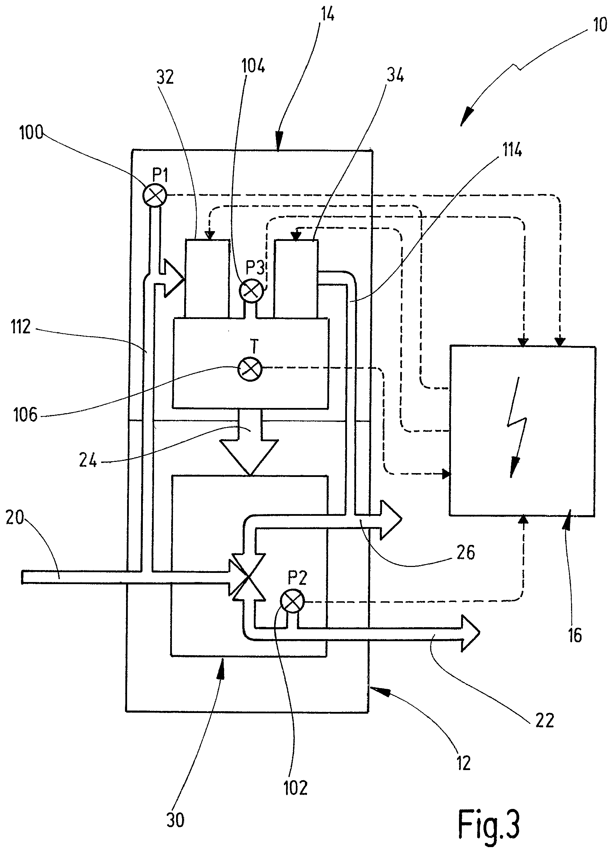

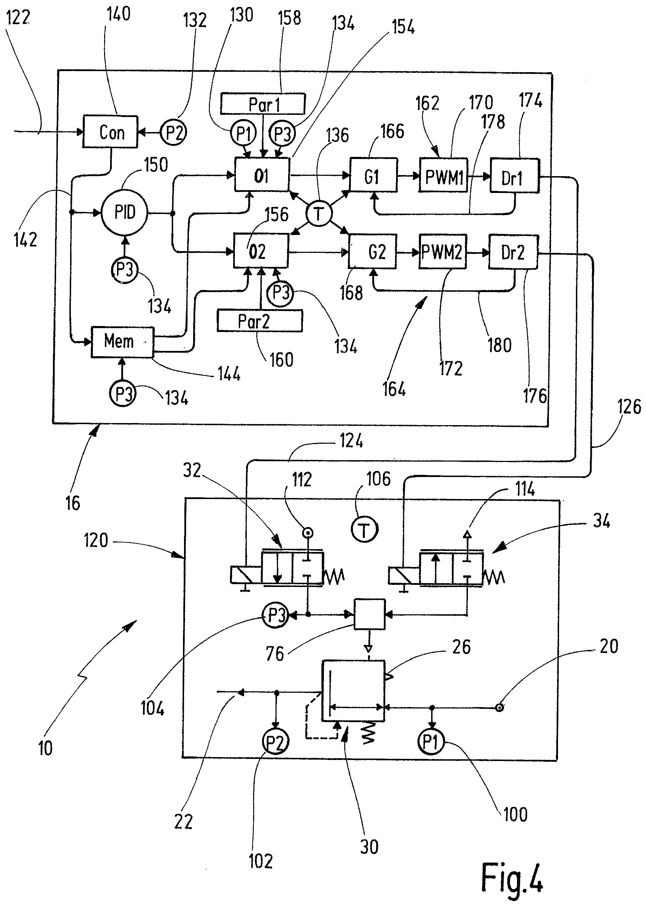

Die Figuren 3 und 4 veranschaulichen anhand schematisch stark vereinfachter Blockdarstellungen unter Nutzung von Symbolen eine Ventilanordnung 10, die in struktureller Hinsicht grundsätzlich gemäß der Schnittdarstellung in Fig. 1 gestaltet sein kann. Es versteht sich, dass in struktureller Hinsicht Abwandlungen und alternative Ausführungen denkbar sind, die jedoch gemäß der vorliegenden Offenbarung steuerbar sind.

Fig. 3 zeigt eine Blockdarstellung der Ventilanordnung 10, die in bekannter Weise mit einer Ventileinheit 12, einer Vorsteuereinheit 14 sowie einer Regeleinheit 16 versehen ist. Die Ventileinheit 12 umfasst ein Ventil 30, das zwischen einem Eingang 20 und einem Ausgang 22 angeordnet ist, um am Ausgang 22 ein druckgeregeltes oder durchflussmengengeregeltes Fluid bereitzustellen.

Die Vorsteuereinheit 14 ist in grundsätzlich bereits vorstehend beschriebener Weise mit einem ersten Vorsteuerventil 32 und einem zweiten Vorsteuerventil 34 versehen. Das erste Vorsteuerventil 32 dient zur Erhöhung eines Vorsteuerdrucks in einer Vorsteuerkammer 76. Das zweite Vorsteuerventil 34 dient zum Absenken des Drucks in der Vorsteuerkammer 76. Über die Vorsteuerkammer 76 kann ein Vorsteuerdruck oder Pilotdruck bereitgestellt werden, der auf das Ventil 30 zu dessen Regelung einwirkt, vgl. einen Blockpfeil 24 in Fig. 3.

Fig. 3 veranschaulicht ferner beispielhaft eine Sensorkonfiguration der Ventilanordnung 10. Vorzugsweise weist die Ventilanordnung 10 drei Drucksensoren 100, 102, 104 auf. Das anhand der Fig. 3 veranschaulichte Ausführungsbeispiel umfasst ferner einen Temperatursensor 106.

Ein erster Drucksensor 100 erfasst einen Eingangsdruck am Ventil 30. Der Eingang 20 des Ventils 30 ist ferner mit einem Eingang des Vorsteuerventils 32 verbunden, das zur Druckerhöhung genutzt wird. Insofern erfasst der erste Drucksensor 100 auch einen Eingangsdruck des Vorsteuerventils 32. Ein zweiter Drucksensor 102 erfasst einen Druck am Ausgang 22 des Ventils 30. Der durch den zweiten Drucksensor 102 erfasste Druck ist der zu regelnde Zieldruck. Ein dritter Drucksensor 104 erfasst einen Druck in der Vorsteuerkammer 76. Somit erfasst der dritte Drucksensor 104 einen Ausgangsdruck des Vorsteuerventils 32 bzw. einen Eingangsdruck des zweiten Vorsteuerventils 34.

Ferner ist der Ventilanordnung 10 zumindest ein Temperatursensor 106 zugeordnet, der beispielhaft bei der Vorsteuereinheit 14 vorgesehen ist. Der Temperatursensor 106 kann etwa eine Spulentemperatur der Vorsteuerventile 32, 34 erfassen, zumindest mittelbar. Darüber hinaus kann der Temperatursensor 106 auch dazu genutzt werden, die Umgebungstemperatur bzw. die Temperatur des Fluids zu ermitteln. Auf Basis von Messwerten, die der Temperatursensor 106 ermittelt hat, kann eine Temperaturkompensation erfolgen.

Eine Verbindungsleitung zur fluidischen Verbindung des Eingangs des Ventils 30 sowie des Eingangs des Vorsteuerventils 32 ist mit 112 bezeichnet. Das Vorsteuerventil 34 dient zum Druckabbau. Demgemäß kann das Vorsteuerventil 34 auch als Entlüftungsventil bezeichnet werden. Ein Ausgang des Vorsteuerventils 34 ist über eine Fluidverbindung 114 mit einer Entlüftung 26 des Ventils 30 gekoppelt, vgl. auch die Darstellung der Entlüftung 26 in Fig. 1. Es versteht sich, dass nicht unbedingt eine (diskrete) Fluidleitung 114 zwischen der Entlüftung 26 des Ventils 30 und dem Ausgang des Vorsteuerventils 34 vorgesehen sein muss. Vielmehr können das Ventil 30 und das Vorsteuerventil 34 in die Umgebung (Atmosphäre) entlüften.

Ein in Fig. 3 mit 16 bezeichneter Block veranschaulicht die Regeleinheit. In Fig. 3 veranschaulichen gestrichelte Linien Signalpfade zwischen der Ventileinheit 12, der Vorsteuereinheit 14 und der Regeleinheit 16. Der Regeleinheit 16 werden Ausgangssignale der Drucksensoren 100, 102, 104 und des Temperatursensors 106 zugeführt. Die Regeleinheit 16 steuert die Vorsteuerventile 32, 34 an, um einen Vorsteuerdruck oder Pilotdruck zur Steuerung des Ventils 30 der Ventileinheit 12 zu erzeugen.

Fig. 4 veranschaulicht eine Ausgestaltung der Regeleinheit 16. Die Regeleinheit 16 ist mit einem Ventilblock 120 gekoppelt, der die Ventileinheit 12 und die Vorsteuereinheit 14 mit den Ventilen 30, 32, 34 zusammenfasst. Denkbare strukturelle Ausgestaltungen können den Figuren 1 und 3 entnommen werden. Fig. 4 deutet anhand einer symbolhaften Darstellung auch die Drucksensoren 100, 102, 104 sowie den Temperatursensor 106 an, die den Ventilen 30, 32, 34 zugeordnet sind.

Die in Fig. 4 gewählte Darstellung veranschaulicht ferner eine Ausgestaltung eines Ausführungsbeispiels eines Verfahrens zur Regelung einer Vorsteuereinheit gemäß zumindest einem Aspekt der vorliegenden Offenbarung.

Ein mit 122 bezeichneter Pfeil veranschaulicht einen Sollwert, der der Regeleinheit 16 zugeführt wird. Bei diesem Sollwert 122 kann es sich etwa um einen SollDruck oder um einen Soll-Durchfluss am Ausgang 22 des Ventils 30 handeln. Der Sollwert 122 wird durch die Regeleinheit 16 in Stellgrößen bzw. Steuersignale 124, 126 überführt, auf deren Basis die Vorsteuerventile 32, 34 angesteuert werden. Die Vorsteuerventile 32, 34 sind beispielhaft als elektromagnetisch betätigte Proportionalventile gestaltet, die im stromlosen (inaktiven) Zustand geschlossen sind. Der Eingang der Vorsteuerventils 32 ist über eine Einlassleitung 112 mit dem Eingang 20 des Ventils 30 verbunden, vgl. auch Fig. 3. Der Ausgang des Vorsteuerventils 34 umfasst eine Entlüftungsleitung 114, die ähnlich wie die Entlüftung des Ventils 30 in die Umgebung entlüftet.

Drucksignale, die durch die Drucksensoren 100, 102, 104 erzeugt werden, werden der Regeleinheit 16 übermittelt, vgl. ein erstes Drucksignal 130, das vom ersten Drucksensor 100 bereitgestellt wird, ein zweites Drucksignal 132, das vom zweiten Drucksensor 102 bereitgestellt wird, und ein drittes Drucksignal 134, das vom dritten Drucksensor 104 bereitgestellt wird. Ein Temperatursignal, das vom Temperatursensor 106 bereitgestellt wird, ist in Fig. 4 mit 136 bezeichnet. Die Signale 130, 132, 134, 136 werden durch die Regeleinheit 16 zur Regelung des Ventilblocks 120 sowie zur Anpassung bzw. Adaption des Regelverhaltens genutzt. Die Regeleinheit 16 ist gemäß zumindest einigen Ausführungsbeispielen ferner zur Temperaturerfassung und Temperaturkompensation ausgestaltet. Demgemäß kann das Temperatursignal 136 bei zumindest einigen Regelschritten und Steuerschritten berücksichtigt werden.

Das Sollwertsignal 122 wird einem Prozessregler (control) 140 zugeführt. Dem Prozessregler 140 wird ferner das zweite Drucksignal 132 zugeführt, das einen Ist-Druck am Ausgang 22 des Ventils 30 beschreibt. Demgemäß kann der Prozessregler 140 eine Regeldifferenz bestimmen. Der Prozessregler 140 ermittelt einen Soll-Vorsteuerdruck 142. Der Soll-Vorsteuerdruck 142 wird einem Regler 150 zugeführt. Der Regler 150 ist beispielhaft als PID-Regler ausgestaltet. Dem Regler 150 wird ferner das Drucksignal 134 zugeführt, das einen Ist-Druck der Vorsteuerkammer 76 beschreibt. Der Prozessregler 140 ist ferner mit einem Offset-Speicher (memory) 144 gekoppelt, um einen gespeicherten Wert für den Offset bzw. Öffnungspunkt zumindest eines der Ventile 32, 34 zu aktualisieren. Auch dem Offset-Speicher 144 kann das dritte Drucksignal 134 zugeführt werden. Im Offset-Speicher 144 hinterlegte Parameter können einen statischen Anteil und einen dynamischen Anteil aufweisen, wie vorstehend beschrieben ist.

Die Ventilanordnung 10 umfasst zwei Pilotventile, nämlich das erste Vorsteuerventil 32 zur Druckerhöhung und das zweite Vorsteuerventil 34 zur Drucksenkung. Vorzugsweise werden beide Vorsteuerventile 32, 34 individuell angesteuert. Demgemäß weist die Regeleinheit 16 für jedes der Vorsteuerventile 32, 34 eine eigene Regelstrecke bzw. Steuerstrecke auf.

Der Regler 150 gibt für jedes der Ventile 32, 34 bei Bedarf eine Steuergröße aus, deren Bestimmung eine Kennlinie bzw. eine Parametrisierung zugrunde gelegt wird, die durch einen Öffnungspunkt (Offset) und einem Verstärkungsfaktor (Gain) charakterisiert ist. Eine Verarbeitung und Anpassung der Offset-Parameter ist in Fig. 4 mit 154, 156 bezeichnete Blöcke veranschaulicht. Den Blöcken 154, 156 wird die Steuergröße zugeführt. Ferner kann den Blöcken 154, 156 über den Offset-Speicher 144 ein historischer Offset-Wert zur Verfügung gestellt werden. Der Block 154 ist dem ersten Vorsteuerventil 32 zugeordnet. Der Block 156 ist dem zweiten Vorsteuerventil 34 zugeordnet.

Dem Block 154 werden ferner Parameterwerte zugeführt, die in einem Parameterspeicher 158 abgelegt sind. Dabei kann es sich etwa um statische Parameter handeln, die Exemplarstreuungen oder Ähnliches beschreiben. Daneben wird der Block 154 mit dem ersten Drucksignal 130 und dem dritten Drucksignal 134 versorgt. Dem Block 156 werden Parameterwerte 160 zugeführt, die etwa statische Parameter beschreiben. Ferner wird dem Block 156 das dritte Drucksignal 134 zugeführt. Die Blöcke 154, 156 können eine dynamische Anpassung der Öffnungspunkte bzw. Offset-Werte der Vorsteuerventile 32, 34 veranlassen.

Neben dem Öffnungspunkt wird die Kennlinie der Vorsteuerventile 32, 34 ferner durch den Verstärkungsfaktor (Gain oder Flankensteilheit) charakterisiert. Eine Anpassung des Verstärkungsfaktors erfolgt vorzugsweise durch eine langsame Nachregelung (feedback control). Das Steuersignal 124 für das erste Vorsteuerventil 32 wird auf Basis des ermittelten Offsets (Block 154) sowie eines Reglers 162 für den Verstärkungsfaktor ermittelt. Der Regler 162 umfasst Blöcke 166, 170, 174.

Gleichermaßen erfolgt die Ermittlung des Steuersignals 126 für das zweite Vorsteuerventil 34 auf Basis eines durch den Block 156 bereitgestellten Offset-Wertes sowie des Reglers 164 für den Verstärkungsfaktor, der Blöcke 168, 172, 176 umfasst. Die Blöcke 166, 168 beschreiben eine Ermittlung bzw. Korrektur eines jeweiligen Verstärkungsfaktors. Den Blöcken 166, 168 wird ein Soll-Signal für das Steuersignal 124, 126 zugeführt. Das jeweilige Soll-Signal wird in den Blöcken 170, 172 in ein PWM-Signal überführt, wobei etwa eine Anpassung des Tastverhältnisses erfolgt. Das PWM-Signal, das durch die Blöcke 170, 172 bereitgestellt wird, wird beispielhaft durch Ausgangsstufen 174, 176 verstärkt, die ein Spannungssignal bereitstellen, auf dessen Basis die Spulenwicklungen der Vorsteuerventile 32, 34 angesteuert werden. Hierbei erfolgt eine Strommessung, vgl. die Pfeile 178, 180. Die Strommessung erlaubt eine Bestimmung eines Ist-Signals, nämlich eines Ist-Stroms, in der jeweils mit der Steuerspannung beaufschlagten Spule der Vorsteuerventile 32, 34. Das so ermittelte Ist-Signal wird den Blöcken 166, 168 zugeführt, um eine Anpassung des Verstärkungsfaktors zu ermöglichen. Als weiterer Eingabewert bzw. Kontrollwert kann den Blöcken 166, 168 das Temperatursignal 136 zugeführt werden. Die Regler 162, 164 sind vorzugsweise als langsame Regler ausgestaltet, um Änderungen des Betriebsverhaltens der Vorsteuerventile 32, 34 mit einem größeren Zeithorizont (Zeitfenster etwa 10 s) berücksichtigen zu können.

Das Regelverhalten der Ventilanordnung 10 lässt sich durch eine beispielhafte Ausgestaltung gemäß zumindest einigen der hier beschriebenen Aspekte weiter verbessern. Es wird vorgeschlagen, einen Regelalgorithmus vorzusehen, der die Regelgüte auf Basis des Drucks am Ausgang 22 des Ventils 30 sowie des Drucks in der Vorsteuerkammer 76 weiter erhöht. Ferner wird die Verwendung eines Temperatursensors vorgeschlagen, der der Regeleinheit 16 zugeordnet ist. Insgesamt kann auf Basis von drei Drucksensoren, von denen ein weiterer Sensor den Druck am Eingang des Ventils 30 erfasst sowie des Temperatursensors eine optimale Anpassung der Kennlinie (Schaltpunkte und Steilheit) der Vorsteuerventile 32, 34 zur Ansteuerung des Druckregelventils 30 verbessert werden. Insgesamt lässt sich damit das Ventil 30 mit minimaler Hysterese steuern.

Eine Ausgestaltung der vorliegenden Offenbarung zielt darauf ab, das Steuersignal (Spannungssignal) 124, 126, mit dem die Vorsteuerventile 32, 34 angesteuert werden, zu regeln, um das Betriebsverhalten der Magnetspulen der Vorsteuerventile 32, 34 zu berücksichtigen bzw. auszugleichen. Hierbei wird vorgeschlagen, den Spulenstrom durch die Spulen der Vorsteuerventile 32, 34 zu messen, vgl. etwa die Pfeile 178, 180 in Fig. 4.

Insbesondere wird eine sog. langsame Stromregelung vorgeschlagen. Demgemäß werden die Spulen der Vorsteuerventile 32, 34 nicht direkt mit dem ermittelten PWM-Wert (etwa dem ermittelten Tastverhältnis für die gegebenen Bedingungen) angesteuert, sondern diesen Wert wird im Sinne einer Nachregelung korrigiert.

Demgemäß gilt Folgendes:

$$PWM = Soll\text{–}Strom * Korrekturfaktor \qquad (1)$$

Insofern wird ein vom eigentlichen Druckregler bereitgestellter Wert nicht mehr als direkter PWM-Wert interpretiert, sondern als Sollwert für den Strom. Der PWM-Wert, der nunmehr vom PWM-Block (vgl. Bezugszeichen 170, 172 in Fig. 4) ausgegeben wird, wird um einen Korrekturfaktor korrigiert, vgl. die obige Gleichung (1).

Der Korrekturfaktor ist variabel und nicht unbedingt konstant. Zur Ermittlung des Korrekturfaktors erfolgt eine Messung des Ist-Stromes (vgl. die Pfeile 178, 180) in den Spulen der Vorsteuerventile 32, 34. Der PWM-Wert als Entsprechung des Soll-Stroms wird mit dem gemessenen Ist-Strom verglichen:

$$Korrekturfaktor = PWM / (Ist\text{–}Strom) \qquad (2)$$

Auf diese Weise erfolgt über den sich ergebenden Korrekturfaktor eine Anpassung, wenn der Ist-Strom zu hoch oder zu niedrig ist.

Ferner wird eine zeitliche Glättung vorgeschlagen, um hochdynamische zeitliche Schwankungen der beteiligten Größen auszugleichen. Eine Glättung kann etwa mit einer Zeitskala (Fensterbreite) im Bereich von 1 s bis hin zu 5 s, 10 s oder gar mehr erfolgen. Vorzugsweise erfolgt hierbei eine nachgelagerte Korrektur, etwa über einen gleitenden Mittelwert für die beteiligten Größen.

Eine (zeitliche) Glättung des Ist-Stroms, des PWM-Wertes und des Korrekturfaktors kann etwa über PT1-Glieder (Verzögerungsglied 1. Ordnung) erfolgen. Im Folgenden beschreiben mit einem Überstrich gekennzeichnete Größe (zeitlich) gemittelte Werte:

$$\overline{Strom} = (1 - a) * \overline{Strom} + a * Strom \qquad (3)$$

$$\overline{PWM} = (1 - a) * \overline{PWM} + a * PWM \qquad (4)$$

$$Korrekturfaktor = \frac{\overline{PWM}}{\overline{Strom}} \qquad (5)$$

$$\overline{Korrekturfaktor} = (1 - a) * \overline{Korrekturfaktor} + a * Korrekturfaktor \qquad (6)$$

$$PWM = Soll\text{–}Strom * \overline{Korrekturfaktor} \qquad (7)$$

Somit wird der Korrekturfaktor auf Basis gemittelter Größen errechnet. Der Korrekturfaktor selbst wird nochmals (zeitlich) gemittelt. Gemäß den obigen Gleichungen (1) bis (7) erfolgt jedoch keine oder allenfalls nur eine geringe Verzögerung oder Dämpfung des gewünschten dynamischen Regelverhaltens. Eine Zeitskala im Sekundenbereich (beispielsweise 10s) wird als ausreichend erachtet, um sich im Betrieb der Ventilanordnung 10 ergebende (etwa temperaturbedingte) Abweichungen kompensieren zu können.

Auf diese Weise können etwa auch ausgeprägte Schwankungen bei der Versorgungsspannung ausgeglichen werden, so dass sich beim Betriebsverhalten der Ventilanordnung 10 keine nachteiligen Auswirkungen ergeben.

**Patentansprüche**

1. Vorsteuereinheit zur Bereitstellung eines Vorsteuerdrucks für eine Ventileinheit (12) zur geregelten Bereitstellung eines Fluids, wobei die Vorsteuereinheit (14) zumindest ein Vorsteuerventil (32, 34), insbesondere zumindest ein elektrisch gesteuertes Vorsteuerventil (32, 34), und eine Regeleinheit (16) aufweist, die mit der Vorsteuereinheit (14) gekoppelt ist,
**dadurch gekennzeichnet,**
**dass** die Regeleinheit (16) zur adaptiven, parameterbasierten Reglung des zumindest einen Vorsteuerventils (32, 34) ausgebildet ist, wobei der Regelung ein einen Öffnungspunkt des Vorsteuerventils (32, 34) beschreibender kombinierter Parameter zugrunde gelegt wird, dessen Bestimmung auf Basis eines statischen Anteils und eines dynamischen Anteils erfolgt,
**dass** die Regelung des zumindest einen Vorsteuerventils (32, 34) auf Basis adaptiver Parameter erfolgt, die eine Kennlinie beschreiben, die einen Zusammenhang zwischen Öffnungsgrad des Vorsteuerventils (32, 34) und Steuergröße beschreibt, und die durch den Öffnungspunkt und eine Steilheit charakterisiert ist,
**dass** der statische Anteil eine, vorzugsweise messtechnisch ermittelte, individuelle Exemplarstreuung beschreibt, und
**dass** der dynamische Anteil im Zeitablauf veränderlich ist, wobei eine Regelung des dynamischen Anteils auf Basis eines Sollwert-Istwert Vergleichs, den Vorsteuerdruck betreffend, erfolgt.

2. Vorsteuereinheit (14) nach Anspruch 1, **dadurch gekennzeichnet, dass** eine Aktualisierung des dynamischen Anteils erfolgt, wenn das Vorsteuerventil (32, 34) nahe des Öffnungspunktes betrieben wird, wobei im Falle eines neuen Wertes des dynamischen Anteils des Öffnungspunktes ein historischer Wert ersetzt wird.

3. Vorsteuereinheit (14) nach Anspruch 2, **dadurch gekennzeichnet, dass** die Regeleinheit (16) einen schnellen Regler (150) zur Regelung des dynamischen Anteils aufweist.

4. Vorsteuereinheit (14) nach einem der vorhergehenden Ansprüche, **dadurch gekennzeichnet, dass** der Regelung ferner ein einen Verstärkungsfaktor beschreibender Parameter zugrunde gelegt wird, dessen Bestimmung auf Basis eines PWM-Ausgangssignals zur Steuerung des zumindest einen Vorsteuerventils (32, 34) und eines erfassten Spulenstromes des Vorsteuerventils (32, 34) erfolgt.

5. Vorsteuereinheit (14) nach Anspruch 4, **dadurch gekennzeichnet, dass** die Regeleinheit (16) zur langsamen Nachregelung des Verstärkungsfaktors ausgebildet ist.

6. Vorsteuereinheit (14) nach einem der vorhergehenden Ansprüche, **dadurch gekennzeichnet, dass** zwei elektrisch gesteuerte Vorsteuerventile (32, 34) vorgesehen sind, die als Proportionalventile gestaltet sind, wobei ein erstes Vorsteuerventil (32) zur Erhöhung des Vorsteuerdrucks und ein zweites Vorsteuerventil (34) zur Verringerung des Vorsteuerdrucks vorgesehen ist.

7. Vorsteuereinheit (14) nach Anspruch 6, **dadurch gekennzeichnet, dass** die Vorsteuerventile (32, 34) individuell geregelt werden.

8. Vorsteuereinheit (14) einem der vorhergehenden Ansprüche, **dadurch gekennzeichnet, dass** ferner zumindest ein Temperatursensor (106) zur Erfassung einer Spulentemperatur des zumindest einen Vorsteuerventils (32, 34) vorgesehen ist, und dass die Regeleinheit (16) zur Temperaturkompensation ausgebildet ist.

9. Ventilanordnung zur geregelten Bereitstellung eines Fluids, mit einer über einen Vorsteuerdruck regelbare Ventileinheit (12) zur Bereitstellung eines Fluids mit geregeltem Ausgangsdruck oder Volumenstrom, **gekennzeichnet durch** eine Vorsteuereinheit (14) nach einem der vorhergehenden Ansprüche.

10. Ventilanordnung (10) nach Anspruch 9, **dadurch gekennzeichnet, dass** ein erster Drucksensor (100) zur Erfassung eines Eingangsdrucks der Ventileinheit (12), ein zweiter Drucksensor (102) zur Erfassung eines Ausgangsdrucks der Ventileinheit (12), und ein dritter Drucksensor (104) zur Erfassung des Vorsteuerdrucks der Vorsteuereinheit (14) vorgesehen ist.

11. Verfahren zur adaptiven, parameterbasierten Regelung eines Vorsteuerdrucks für eine Ventileinheit (12) zur geregelten Bereitstellung eines Fluids, umfassend die folgenden Schritte:

- Ermittlung eines kombinierten Parameters, der einen Öffnungspunkt des zumindest eines Vorsteuerventils (32, 34) beschreibt, umfassend Ermittlung eines statischen Anteils und eines dynamischen Anteils des Parameters,
- elektrische Ansteuerung zumindest eines Vorsteuerventils (32, 34), vorzugsweise eines ersten Vorsteuerventils (32) und eines zweiten Vorsteuerventils (34), auf Basis des Parameters, und

- Regelung des zumindest einen Vorsteuerventils (32, 34) auf Basis adaptiver Parameter, die eine Kennlinie beschreiben, die einen Zusammenhang zwischen Öffnungsgrad des Vorsteuerventils (32, 34) und Steuergröße beschreibt, und die durch den Öffnungspunkt und eine Steilheit charakterisiert ist, wobei der statische Anteil eine, vorzugsweise messtechnisch ermittelte, individuelle Exemplarstreuung beschreibt, und wobei der dynamische Anteil im Zeitablauf veränderlich ist, wobei eine Regelung des dynamischen Anteils auf Basis eines Sollwert-Istwert Vergleichs, den Vorsteuerdruck betreffend, erfolgt.

**12.** Verfahren nach Anspruch 11, ferner umfassend:

- adaptive Anpassung der Parameter für Öffnungsgrad und Steuergröße, in Abhängigkeit von einem Betriebszustand der Ventileinheit (12).

**13.** Verfahren nach Anspruch 11 oder 12, ferner umfassend:

- Ansteuerung eines ersten Vorsteuerventils (32) zur Erhöhung des Vorsteuerdrucks, und
- Ansteuerung eines zweiten Vorsteuerventils (34) zur Verringerung des Vorsteuerdrucks.

**14.** Maschinensteuerungsprogramm, das Programmcode aufweist, der dazu ausgebildet ist, eine Regeleinheit (16) einer Vorsteuereinheit (14) für eine Ventileinheit (12) zu veranlassen, die Schritte des Verfahrens nach einem der Ansprüche 11 bis 13 auszuführen, wenn das Maschinensteuerungsprogramm auf einer Datenverarbeitungsanlage ausgeführt wird, die mit der Regeleinheit (16) gekoppelt ist.

**Claims**

**1.** A pilot control unit for providing a pilot control pressure for a valve unit (12) for the regulated provision of a fluid, the pilot control unit (14) comprising at least one pilot control valve (32, 34), in particular at least one electrically controllable pilot control valve (32, 34), and a regulating unit (16) that is coupled to the pilot control unit (14), **characterized in that** the regulating unit (16) is configured for adaptive parameter-based regulation of the at least one pilot control valve (32, 34), wherein the regulation is based on a combined parameter that describes an opening point of the pilot control valve (32, 34), wherein the combined parameter is determined based on a static component and a dynamic component, the regulation of the at least pilot control valve (32, 34) is based on adaptive parameters that describe a characteristic curve, which describes a relationship between a degree of opening of the pilot control valve (32, 34) and a control variable, and which is **characterized by** an opening point and a steepness, the static component describes an individual variation, which is preferably determined by measuring, and the dynamic component is a temporally variable, wherein the regulation of the dynamic component is based on a set point value-actual value comparison that relates to the pilot control pressure.

**2.** The pilot control unit (14) according to claim 1, **characterized in that** an update of the dynamic component takes place when the at least one pilot control valve (32, 34) is operated close to the opening point, wherein when a new value for the dynamic component of the opening point is present, an historical value is replaced.

**3.** The pilot control unit (14) according to claim 2, **characterized in that** the regulating unit (16) comprises a fast controller (150) for regulating the dynamic component.

**4.** The pilot control unit (14) according to anyone of the preceding claims, **characterized in that** the regulation is further based on a parameter describing an amplification factor, which is determined based on a PWM output signal for controlling the at least one pilot control valve (32, 34) and a detected coil current of the pilot control valve (32, 34).

**5.** The pilot control unit (14) according to claim 4, **characterized in that** the regulating unit (16) is configured for a slow feedback control of the amplification factor.

**6.** The pilot control unit (14) according to anyone of the preceding claims, **characterized in that** two electrically controlled pilot valves (32, 34) are provided, which are configured as proportional valves, wherein a first proportional pilot control valve (32) is provided for increasing the pilot control pressure and a second proportional second pilot control valve (34) is provided for reducing the pilot control pressure.

7. The pilot control unit (14) according to claim 6, **characterized in that** the pilot control valves (32, 34) are individually regulated.

8. The pilot control unit (14) according to anyone of the preceding claims, **characterized in that** at least one temperature sensor (106) for detecting a coil temperature of the at least one pilot control valve (32, 34) is further provided, and that the regulating unit (16) is configured for temperature compensation.

9. A valve arrangement for the regulated provision of a fluid, comprising a valve unit (12) that can be regulated via a pilot control pressure to supply a fluid with a regulated outlet pressure or volumetric flow, **characterized by** a pilot control unit (14) according to anyone of the preceding claims.

10. The valve arrangement according to claim 9, **characterized in that** a first pressure sensor (100) for detecting an inlet pressure of the valve unit (12), a second pressure sensor (102) for detecting an outlet pressure of the valve unit (12), and a third pressure sensor (104) for detecting the pilot control pressure of the pilot control unit (14) are provided.

11. A method for adaptive, parameter-based regulation of a pilot control pressure for a valve unit (12) for the regulated provision of a fluid, the method comprising the steps of:

- determining a combined parameter that describes an opening point of at least one pilot control valve (32, 34), including determining a static component and a dynamic component of the parameter,
- electrically controlling at least one pilot control valve (32, 34), preferably a first pilot control valve (32) and a second pilot control valve (34), based on the parameter, and
- regulating the at least one pilot control valve (32, 34) based on adaptive parameters that describe a characteristic curve, which describes a relationship between a degree of opening of the pilot control valve (32, 34) and a control variable, which is defined by an opening point and an amplification factor,
wherein the static component describes an individual variation, which is preferably determined by measuring, and wherein the dynamic component is temporally variable, wherein the regulation of the dynamic component is based on a set point value-actual value comparison that relates to the pilot control pressure.

12. The method according to claim 11, further comprising:

- adaptively adjusting the adaptive parameters for the degree of opening and the control variable, depending on an operating state of the valve unit (12).

13. The method according to claim 11 or 12, further comprising:

- controlling a first pilot control valve (32) to increase the pilot control pressure, and
- controlling a second pilot control valve (34) to reduce the pilot control pressure.

14. A machine control program comprising program code that causes a regulating unit (16) of a pilot control unit (14) for a valve unit (12) to carry out steps of the method of anyone of the claims 11 to 13, when the machine control program is executed on a data processing system, which is coupled to the regulating unit (16).

**Revendications**

1. Ensemble de précommande, destiné à mettre à disposition une pression de précommande pour un ensemble de soupapes (12) pour la mise à disposition régulée d'un fluide, l'ensemble de précommande (14) comportant au moins une soupape de précommande (32, 34), notamment au moins une soupape de précommande (32, 34) à commande électrique et un ensemble de régulation (16) qui est accouplé avec l'ensemble de précommande (14), **caractérisé en ce que** l'ensemble de régulation (16) est conçu pour la régulation adaptative, basée sur des paramètres de l'au moins une soupape de précommande (32, 34), la régulation étant basée sur un paramètre mixte décrivant un point d'ouverture de la soupape de précommande (32, 34), dont la détermination a lieu sur la base d'une part statique et d'une part dynamique,

**en ce que** la régulation de l'au moins une soupape de précommande (32, 34) a lieu sur la base de paramètres adaptatifs qui décrivent une courbe caractéristique qui décrit une relation entre le degré d'ouverture de la soupape de précommande (32, 34) et la grandeur de commande et qui est **caractérisée par** le point d'ouverture et par une pente et

en ce que la part statique décrit une dispersion exemplaire individuelle, déterminée de préférence par une technique de mesure et

en ce que la part dynamique est variable au cours du temps, une régulation de la part dynamique ayant lieu sur la base d'une comparaison valeur de consigne/valeur réelle, concernant la pression de précommande.

2. Ensemble de précommande (14) selon la revendication 1, **caractérisé en ce qu'**une mise à jour de la part dynamique a lieu lorsque la soupape de précommande (32, 34) fonctionne de manière proche du point d'ouverture, dans le cas d'une nouvelle valeur de la part dynamique du point d'ouverture, une valeur historique étant remplacée.

3. Ensemble de précommande (14) selon la revendication 2, **caractérisé en ce que** l'ensemble de régulation (16) comporte un régulateur rapide (150) pour la régulation de la part dynamique.

4. Ensemble de précommande (14) selon l'une quelconque des revendications précédentes, **caractérisé en ce que** la régulation est basée par ailleurs sur un paramètre décrivant un coefficient d'amplification dont la détermination a lieu sur la base d'un signal de sortie PWM, pour la commande de l'au moins une soupape de précommande (32, 34) et d'un courant de bobine détecté de la soupape de précommande (32, 34).

5. Ensemble de précommande (14) selon la revendication 4, **caractérisé en ce que** l'ensemble de régulation (16) est conçu pour un réajustement lent du coefficient d'amplification.

6. Ensemble de précommande (14) selon l'une quelconque des revendications précédentes, **caractérisé en ce que** deux soupapes de précommande (32, 34) à commande électrique sont prévues, lesquelles sont conçues sous la forme de soupapes proportionnelles, une première soupape de précommande (32) étant prévue pour augmenter la pression de précommande et une deuxième soupape de précommande (34) étant prévue pour réduire la pression de précommande.

7. Ensemble de précommande (14) selon la revendication 6, **caractérisé en ce que** les soupapes de précommande (32, 34) sont régulées individuellement.

8. Ensemble de précommande (14) selon l'une quelconque des revendications précédentes, **caractérisé en ce qu'**il est prévu par ailleurs au moins un capteur de température (106), destiné à détecter une température de bobine de l'au moins une soupape de précommande (32, 34) et **en ce que** l'ensemble de régulation (16) est conçu pour la compensation de température.

9. Agencement de soupapes destiné à mettre à disposition un fluide de manière régulée, pourvu d'un ensemble de soupapes (12) susceptible d'être régulé par l'intermédiaire d'une pression de précommande, pour la mise à disposition d'un fluide à pression de sortie ou débit régulé(e), **caractérisé par** un ensemble de précommande (14) selon l'une quelconque des revendications précédentes.

10. Agencement de soupapes (10) selon la revendication 9, **caractérisé en ce qu'**il est prévu un premier capteur de pression (100), destiné à détecter une pression d'entrée de l'ensemble de soupapes (12), un deuxième capteur de pression (102), destiné à détecter une pression de sortie de l'ensemble de soupapes (12), et un troisième capteur de pression (104), destiné à détecter la pression de précommande de l'ensemble de précommande (14).

11. Procédé destiné à la régulation adaptative, basée sur des paramètres d'une pression de précommande d'un ensemble de soupapes (12), pour la mise à disposition régulée d'un fluide, comprenant les étapes suivantes consistant à :

- déterminer un paramètre mixte qui décrit un point d'ouverture de l'au moins une soupape de précommande (32, 34), comprenant la détermination d'une part statique et d'une part dynamique du paramètre,
- activer électriquement au moins une soupape de précommande (32, 34), de préférence une première soupape de précommande (32) et une deuxième soupape de précommande (34), sur la base du paramètre et
- réguler l'au moins une soupape de précommande (32, 34) sur la base de paramètres adaptatifs qui décrivent une courbe caractéristique qui décrit une relation entre le degré d'ouverture de la soupape de précommande (32, 34) et la grandeur de commande et qui est **caractérisée par** le point d'ouverture et une pente,
la part statique décrivant une dispersion exemplaire individuelle, déterminée de préférence par une technique de mesure et
la part dynamique étant variable au cours du temps, une régulation de la part dynamique ayant lieu sur la base d'une comparaison valeur de consigne/valeur réelle, concernant la pression de précommande.

12. Procédé selon la revendication 11, comprenant :

   - l'ajustement adaptatif des paramètres pour le degré d'ouverture et la grandeur de commande, en fonction d'un état de service de l'ensemble de soupapes (12).

13. Procédé selon la revendication 11 ou 12, comprenant :

   - l'activation d'une première soupape de précommande (32) pour augmenter la pression de précommande et
   - l'activation d'une deuxième soupape de précommande (34) pour réduire la pression de précommande.

14. Programme de commande de machine qui comporte un code programme, qui est conçu pour inciter un ensemble de régulation (16) d'un ensemble de précommande (14) pour un ensemble de soupapes (12) à réaliser les étapes du procédé selon l'une quelconque des revendications 11 à 13, lorsque le programme de commande de machine est exécuté sur une installation de traitement de données qui est accouplée avec l'ensemble de régulation (16).

Fig.1

Fig.2

Fig.3

Fig.4

**EP 3 176 667 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2921924 A1